Europäisches Patentamt

European Patent Office

Office européen des brevets

(19)

(11) EP 0 739 814 B1

(12) FASCICULE DE BREVET EUROPEEN

(45) Date de publication et mention
de la délivrance du brevet:
**31.03.1999 Bulletin 1999/13**

(51) Int. Cl.⁶: **B64C 27/00**, F16F 7/10,
F16F 15/14

(21) Numéro de dépôt: 96400868.4

(22) Date de dépôt: 24.04.1996

(54) **Dispositif d'atténuation de vibrations pour rotor d'hélicoptère**

Schwingungsdämpfer-Vorrichtung für einen Hubschrauberrotor

Vibration damping device for helicopter rotor

(84) Etats contractants désignés:
**DE GB IT**

(30) Priorité: **27.04.1995 FR 9505071**

(43) Date de publication de la demande:
**30.10.1996 Bulletin 1996/44**

(73) Titulaire: **EUROCOPTER**
**F-13725 Marignane Cédex (FR)**

(72) Inventeur: **Guimbal, Bruno**
**13290 Les Milles (FR)**

(74) Mandataire: **Loisel, Bertrand**
**Cabinet Plasseraud,**
**84, rue d'Amsterdam**
**75440 Paris Cédex 09 (FR)**

(56) Documents cités:
**GB-A- 2 123 371          US-A- 2 307 518**
**US-A- 4 239 456**

## Description

La présente invention concerne un dispositif pour atténuer des vibrations générées par le mouvement d'un rotor d'hélicoptère.

Pour absorber des efforts vibratoires perpendiculaires à l'axe de rotation du rotor, dits efforts coplanaires, il est connu de relier au moyeu des corps pendulaires qui oscillent sous l'effet de la force centrifuge. Par un réglage de dimensionnement (rayon de l'oscillation pendulaire et distance entre l'axe de rotation et le centre de gravité du corps pendulaire), on est capable d'adapter la pulsation propre d'oscillation à une pulsation à laquelle on souhaite obtenir une atténuation. En ce qui concerne ces efforts coplanaires, il est souhaitable d'atténuer les vibrations de pulsation $(b-1)\Omega$ et $(b+1)\Omega$, b désignant le nombre de pales du rotor et $\Omega$ désignant sa vitesse angulaire de rotation. Les dispositifs d'atténuation pendulaires mentionnés ci-dessus, tels que décrits dans US-A-3 035 643, sont assez limités quant à leur pulsation propre. Ils conviennent donc surtout pour les rotors d'hélicoptère comportant un petit nombre de pales. Ces contraintes peuvent être atténuées en utilisant une liaison de type bifilaire entre les corps pendulaires et le moyeu (voir US-A-3 540 809). Théoriquement très intéressant, ce système bifilaire présente néanmoins certains inconvénients en pratique. Ainsi, la tenue en service des pistes roulantes des liaisons bifilaires, en extérieur, pose un sérieux problème. Les solutions retenues pour traiter ce problème (par exemple acier à roulements inoxydable, lubrification fréquente à la graisse) ne sont pas toujours commodes et ne permettent pas une fiabilité suffisante (écaillage, rupture, ...), ce qui reste peu satisfaisant. En outre, le montage simultané de deux ensembles, l'un pour $(b-1)\Omega$ et l'autre pour $(b+1)\Omega$, est pénalisant en termes de masse et d'encombrement. L'indice constructif, c'est-à-dire le rapport entre la masse mobile et la masse totale du système est finalement médiocre.

Un but de la présente invention est de proposer une autre structure pendulaire d'atténuation pour rotor d'hélicoptère, qui permette d'éviter certaines au moins des limitations ci-dessus.

L'invention propose ainsi un dispositif d'atténuation de vibrations pour rotor d'hélicoptère, comprenant au moins un corps pendulaire monté sur le rotor de façon à pouvoir osciller autour d'un axe de mouvement pendulaire espacé du centre d'inertie du corps pendulaire. Le corps pendulaire est monté pivotant autour d'un axe de rotation propre parallèle à l'axe de mouvement pendulaire et situé sensiblement plus près du centre d'inertie du corps pendulaire que de l'axe de mouvement pendulaire.

La rotation du corps pendulaire sur lui-même réduit sensiblement les effets de l'inertie du corps pendulaire, effets qui limitent les pulsations propres auxquelles on est capable d'atténuer les vibrations. Par rapport aux systèmes bifilaires, on dispose en outre d'une plus grande liberté dans le choix de la structure de raccordement des corps pendulaires, de sorte qu'on peut réduire l'incidence des contraintes qui affectent les systèmes bifilaires.

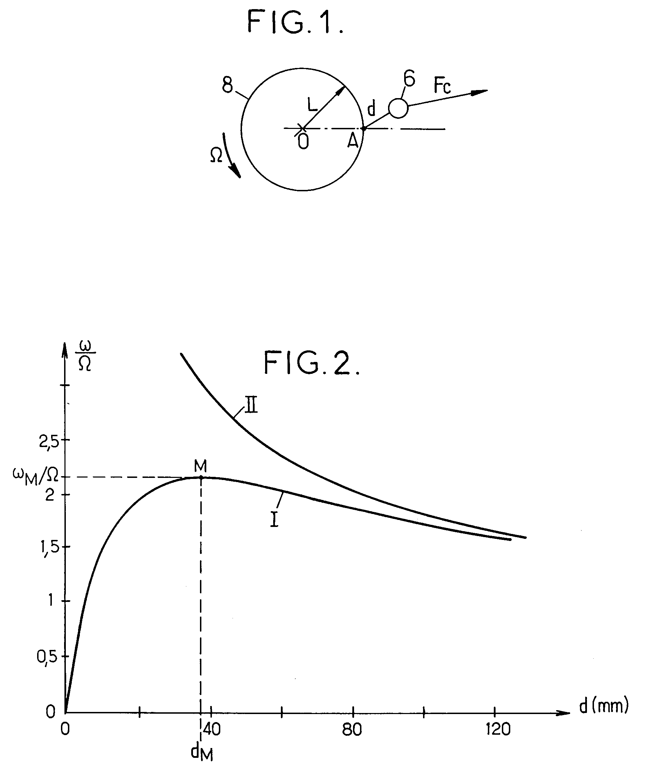

A titre d'illustration, la figure 1 montre un corps pendulaire 6 articulé en A (axe de mouvement pendulaire) à un organe 8 tournant autour d'un axe O à une vitesse angulaire $\Omega$. L désigne le rayon d'attache, c'est-à-dire la distance entre les axes O et A. d désigne l'excentricité du pendule, c'est-à-dire la distance entre l'axe A et le centre d'inertie du corps pendulaire 6. m désignant la masse du corps pendulaire 6 et $I_0$ son inertie autour de l'axe parallèle à O et A et passant par son centre d'inertie, la force centrifuge Fc confère au corps pendulaire 6 une pulsation propre $\omega$ donnée par :

$$\omega \;=\; \Omega \; \sqrt{\frac{dL}{d^2 + I_O/m}} \qquad\qquad (1)$$

En d'autres termes, l'excentricité d est racine de l'équation :

$$d^2 - \frac{Ld}{(\omega/\Omega)^2} \;+\; \frac{I_0}{m} \;=\; 0 \qquad\qquad (2)$$

La dépendance entre la pulsation propre et l'excentricité est illustrée par la courbe I sur la figure 2, dans le cas particulier d'un corps pendulaire cylindrique de rayon r=50 mm avec L=340 mm. On voit que, pour un rapport $I_0/m$ donné et un rayon L donné, le simple système pendulaire a une pulsation propre limitée à $\omega_M = \Omega(mL^2/4I_0)^{1/4}$ et ce pour $d_M = (I_0/m)^{1/2}$, ce qui correspond au cas où l'équation (2) admet une racine double (point M). Dans le cas d'un corps cylindrique de rayon r, si on vise un rapport relativement grand entre $\omega$ et $\Omega$, on est donc amené à sélectionner un très petit rayon r, ce qui pose des problèmes de mise en oeuvre.

Sur le graphique de la figure 2, la courbe II illustre le cas idéal d'une masse ponctuelle ($I_0$=0), pour lequel $(\omega/\Omega)^2$=L/d . Ce cas idéal est théoriquement celui des systèmes bifilaires, dont la cinématique est telle que les corps pendulaires ont seulement un mouvement de translation par rapport à leur support. C'est également le cas d'un dispositif selon l'invention, lorsque l'axe de rotation propre du corps pendulaire passe par son centre d'inertie, ce qui annule le terme $I_0$ dans les équations (1) et (2) ci-dessus. Comme l'effort dynamique coplanaire créé par les corps pendulaires est proportionnel à l'excentricité d et à la masse m, l'efficacité dynamique de l'atténuation pour une masse donnée est proportionnelle à d. On peut donc définir l'efficacité massique E d'un pendule comme le rapport entre son excentricité d et l'excentricité $d_{II}$=L/$(\omega/\Omega)^2$=d+$I_0$/md  qu'aurait une masse ponctuelle pour obtenir la même pulsation propre, soit :

$$E \;=\; \frac{d^2}{d^2+I_0/m} \;=\; \left(\frac{d}{L}\right)\left(\frac{\omega}{\Omega}\right)^2$$

Cette efficacité massique vaut 1 dans le cas d'un système bifilaire idéal ou d'un corps pendulaire qui, suivant l'invention, pivote librement autour de son centre d'inertie. En fait, l'efficacité globale à prendre en considération est le produit entre l'efficacité massique E et l'indice constructif du dispositif. A cet égard, la plus grande liberté de conception procurée par l'invention, permettant une plus faible masse totale pour une même masse pendulaire lui donne un avantage appréciable par rapport aux systèmes bifilaires.

Dans un dispositif selon l'invention, la rotation propre du corps pendulaire peut s'effectuer suivant un axe quelque peu excentré par rapport à son centre d'inertie. Ceci peut servir à limiter la rotation propre du corps pendulaire, bien que celle-ci soit a priori indifférente, ou à des fins de réglage. On réalise ainsi un double pendule, dont la seconde excentricité doit néanmoins rester petite devant l'excentricité principale d pour que la pulsation propre correspondante soit très élevée.

De préférence, un dispositif selon l'invention, pour l'atténuation de vibrations dans un plan perpendiculaire à l'axe de rotation du rotor, l'axe de mouvement pendulaire étant sensiblement parallèle à l'axe de rotation du rotor, comporte au moins un bras lié en rotation au moyeu du rotor, ce bras supportant un premier corps pendulaire mobile autour d'un premier axe de mouvement pendulaire espacé du centre d'inertie du premier corps pendulaire et sensiblement parallèle à l'axe de rotation du rotor, le premier corps pendulaire étant monté pivotant autour d'un axe de rotation propre parallèle au premier axe de mouvement pendulaire et situé sensiblement plus près du centre d'inertie du premier corps pendulaire que du premier axe de mouvement pendulaire, et le bras supportant en outre un second corps pendulaire mobile autour d'un second axe de mouvement pendulaire espacé du centre d'inertie du second corps pendulaire et sensiblement parallèle à l'axe de rotation du rotor. Lorsque le nombre b de pales n'est pas trop élevé (par exemple b=3), on peut ainsi prévoir que les premiers corps pendulaires soient réglés sur la pulsation propre (b+1)$\Omega$ et que les seconds corps pendulaires soient réglés sur la pulsation propre (b-1)$\Omega$ Il est alors possible d'agencer le second corps pendulaire de façon qu'il ait un mouvement pendulaire simple, c'est-à-dire que son seul degré de liberté soit son oscillation autour du second axe de mouvement pendulaire. Si on accepte une efficacité massique sous-optimale, un réglage des seconds corps pendulaires au voisinage du point M (figure 2), c'est-à-dire avec $I_0$/m $\simeq$ $L^2$/[4$(\omega/\Omega)^4$] = $L^2$/[4(b-1)$^4$] , soit r $\simeq$ L/[$\sqrt{2}$(b-1)$^2$] dans le cas d'un corps cylindrique de rayon r, présente alors un intérêt : ce réglage est très peu sensible aux tolérances de fabrication ou à l'usure, et on a une certaine liberté dans la position du second axe de mouvement pendulaire. Mais, au point M, l'efficacité massique E n'est que de 0,5, de sorte qu'on peut être amené à réduire le rapport $I_0$/m relativement à la valeur mentionnée ci-dessus, pour trouver un compromis entre l'efficacité massique et la commodité et la fiabilité du montage.

Un dispositif selon l'invention peut être utilisé pour atténuer des vibrations du rotor autres que des vibrations coplanaires, notamment des vibrations générées par le battement de chaque pale. Il est connu de prévoir au pied de chaque pale un élément pendulaire d'atténuation dont l'axe de mouvement pendulaire est perpendiculaire à l'axe du rotor et à l'envergure de la pale (voir FR-A-2 530 216 ou US-A-4 239 456). En prévoyant, conformément à l'invention, que ces corps pendulaires tournent sur eux-mêmes, on peut aisément améliorer l'efficacité massique de l'atténuation.

D'autres particularités et avantages de l'invention apparaîtront dans la description ci-après d'exemples de réalisation préférés mais non limitatifs, en référence aux dessins annexés, dans lesquels :

- les figures 1 et 2, précédemment mentionnées, sont un schéma et un graphique illustrant la dynamique d'un système pendulaire simple pour l'atténuation de vibrations ;
- la figure 3 est un schéma en perspective d'un dispositif d'atténuation de vibrations coplanaires selon l'invention ;
- la figure 4 est une vue en coupe suivant un plan radial d'une partie du dispositif de la figure 3 ;
- les figures 5 et 6 sont des schémas en perspective de variantes d'agencement de corps pendulaires selon l'invention ;

- les figures 7 et 8 sont des schémas en perspective d'éléments de montage de corps pendulaires selon l'invention ; et

- la figure 9 est une vue en coupe schématique d'un dispositif d'atténuation en pied de pale selon l'invention.

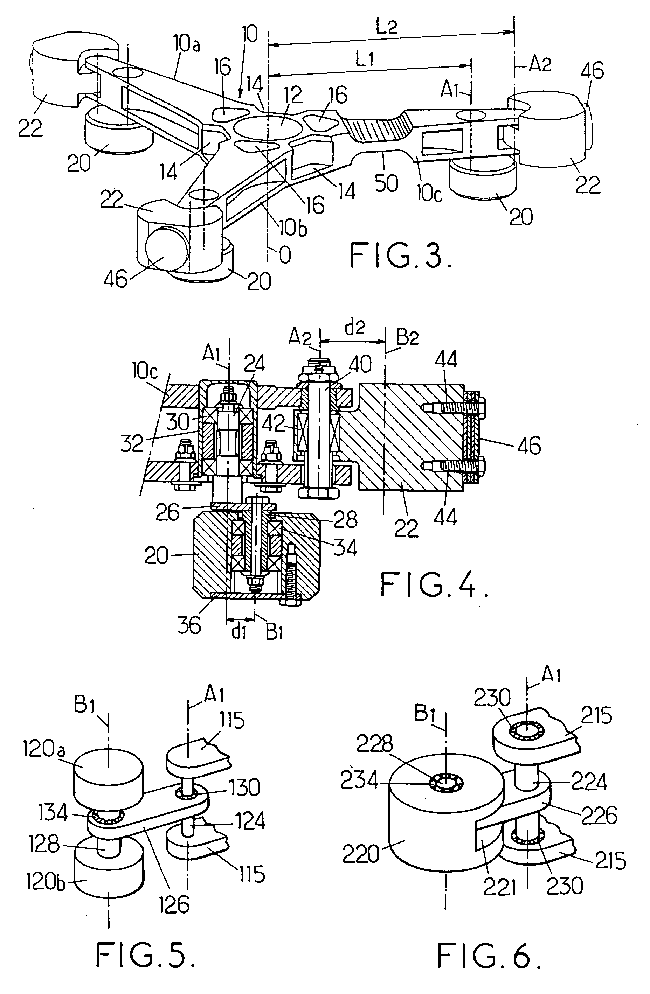

La figure 3 montre un dispositif d'atténuation de vibrations coplanaires pour un rotor principal d'hélicoptère à trois pales. Ce dispositif comprend un support 10 comprenant trois bras radiaux 10a, 10b, 10c s'étendant à 120° les uns des autres dans un plan perpendiculaire à l'axe O de rotation du rotor. Le support 10 comprend un alésage central 12 pour recevoir l'arbre de rotation du rotor (non représenté). Entre les bras 10a, 10b, 10c, la partie centrale du support 10 comporte trois évidements radiaux 14 au fond desquels le support 10 est boulonné sur l'arbre. A la base des bras 10a, 10b, 10c, la partie centrale du support 10 comporte en outre trois évidements axiaux 16 ouverts vers le haut, au fond desquels le support 10 est boulonné sur le moyeu (non représenté) du rotor supportant les trois pales. Chacune des pales s'étend dans une direction diamétralement opposée à celle de l'un des bras 10a, 10b, 10c.

Chaque bras 10a, 10b, 10c supporte, près de son extrémité, deux corps pendulaires 20, 22, dont l'agencement est représenté plus en détail sur la vue en coupe de la figure 4, prise selon un plan radial. Les corps pendulaires 20 sont agencés pour atténuer des vibrations coplanaires de pulsation $(b+1)\Omega$ ($\Omega$ désignant la vitesse angulaire de rotation du rotor autour de l'axe O, et b désignant le nombre de pales du rotor, soit b=3 dans l'exemple considéré), et les corps pendulaires 22 sont agencés pour atténuer des vibrations coplanaires de pulsation $(b-1)\Omega$.

Les corps pendulaires 20 sont montés sur le support 10 de façon à pouvoir osciller autour d'un axe de mouvement pendulaire A1 parallèle à l'axe O de rotation du rotor et situé à une distance L1 de ce dernier. Le corps pendulaire 20 peut par ailleurs pivoter librement autour d'un axe B1 passant par son centre d'inertie et parallèle aux axes O et A1. L'excentricité d1 du corps pendulaire 20 correspond à la distance entre les axes A1 et B1. L'accord des premiers corps pendulaires 20 sur la pulsation $(b+1)\Omega$ consiste à régler l'excentricité d1 de façon à vérifier $d1 \approx L1/(b+1)^2$.

Dans l'agencement illustré et sur la figure 4, le corps pendulaire 20 est monté sur le bras 10c par l'intermédiaire d'une première broche 24 s'étendant suivant l'axe A1, d'un élément d'espacement 26 solidaire de la broche 24 et s'étendant transversalement à celle-ci pour définir l'excentricité d1, et d'une douille 28 boulonnée à l'élément d'espacement 26 et s'étendant suivant l'axe B1. Des roulements à billes 30 assurent la libre rotation de la broche 24 par rapport au bras 10c suivant l'axe A1. Les roulements 30 sont par exemple placés entre la broche 24 et un tube cylindrique 32 fixé au bras 10c et fermé à son extrémité supérieure pour former un capot de protection de l'articulation. D'autres roulements à billes 34 sont placés entre la douille 28 et le corps pendulaire 20 pour assurer la libre rotation de celui-ci autour de l'axe B1.

On peut prévoir un réglage de la masse des corps pendulaires 20 qui n'affecte pas l'accord en pulsation. Dans l'exemple représenté sur la figure 4, on prévoit ainsi la fixation, à la partie inférieure du corps pendulaire 20, de masselottes de réglage 36 en forme de disques centrés sur l'axe B1.

On comprendra que des agencements très divers peuvent être utilisés pour réaliser la double articulation des corps pendulaires 20. A titre nullement limitatif, les figures 5 et 6 illustrent deux variantes d'agencement, dans lesquelles les corps pendulaires sont placés à l'extrémité en forme de chape du bras.

Dans l'exemple de la figure 5, le corps pendulaire est réparti en deux moitiés 120a, 120b reliées par une broche 128. Une autre broche 124 est fixée entre les deux ailes 115 de la chape. L'élément d'espacement 126 est articulé à ses extrémités aux deux broches 124, 128 au moyen de roulements à billes respectifs 130, 134.

Dans l'exemple de la figure 6, le corps pendulaire 220 est soutenu par un élément en forme de H comportant l'élément d'espacement 226 et, séparées par la distance d1, les deux broches 224, 228. Le corps pendulaire 220, de forme générale cylindrique présente une encoche radiale 221 pour permettre le passage de l'élément d'espacement 226. La première broche 224 est articulée sur les deux ailes 215 de la chape au moyen de roulements à billes 230. Le corps pendulaire 220 est articulé sur la deuxième broche 228 au moyen de roulements à billes 234. Dans l'exemple de la figure 6, l'axe B1 de rotation du corps pendulaire sur lui-même est un peu décalé par rapport à la position de son centre d'inertie de sorte que, lorsque le rotor tourne à la vitesse $\Omega$, l'amplitude angulaire de la rotation sur lui-même du corps pendulaire 220 est limitée. On réalise ainsi un pendule double dont la seconde fréquence propre reste néanmoins très élevée. La largeur angulaire de l'encoche 221 est choisie suffisante pour que le corps pendulaire 220 ne heurte pas l'élément d'espacement 226 dans les limites de son amplitude angulaire d'oscillation autour de l'axe B1.

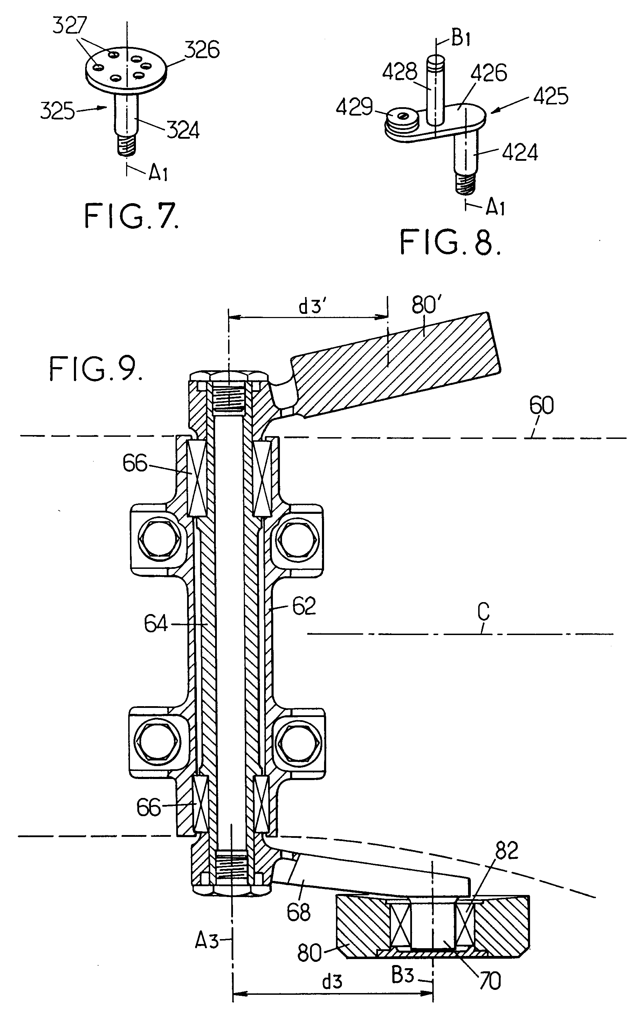

L'invention prévoit avantageusement des moyens de réglage de la distance entre l'axe de mouvement pendulaire A1 et l'axe de rotation B1 du corps pendulaire. Ce réglage de distance peut être obtenu au moyen d'un élément de montage tel que celui représenté sur la figure 7. Cet élément de montage 325 comprend une broche 324 destinée à être montée pivotante sur le bras du support 10, et un élément d'espacement 326 s'étendant perpendiculairement à la broche 324, c'est-à-dire aux axes A1 et B1. L'élément d'espacement 326 comporte plusieurs orifices 327 (six dans l'exemple représenté) situés à des distances différentes de l'axe A1. Ces orifices 327 permettent d'installer une deuxième broche (non représentée) définissant l'axe B1 en sélectionnant l'excentricité d1. Dans l'exemple représenté sur la figure 7, l'élément d'espacement 326 est réalisé d'un seul tenant avec la broche 324, mais on comprendra que cette broche 324 pourrait également être fixée par boulonnage dans l'un des orifices 327, donnant ainsi une plus grande latitude dans le choix de la distance séparant les deux broches.

La figure 8 montre un autre agencement d'un élément de montage 425 utilisable pour installer les corps pendulaires 20. Cet élément de montage est en forme de vilebrequin ayant une première broche 428 s'étendant suivant l'axe B1 et recevant le corps pendulaire 20 de façon pivotante, une seconde broche 424 s'étendant suivant l'axe A1 et destinée à être montée pivotante sur le bras du support 10, et un élément d'espacement 426 auquel sont fixées les broches 424, 428. L'élément d'espacement 426 comporte, au-delà de la broche 428 relativement à la broche 424, un orifice (non visible sur la figure 8) sur lequel on peut visser des masselottes de réglage 429.

Les corps pendulaires 22, représentés au bout des bras 10a, 10b, 10c sur les figures 3 et 4, ont un mouvement pendulaire simple par rapport au support 10 lorsque le rotor tourne. Leurs axes de mouvement pendulaire A2 sont parallèles à l'axe O de rotation du rotor, et séparés de celui-ci par une distance L2. La distance d2 entre l'axe de mouvement pendulaire A2 et l'axe B2 parallèle à ce dernier et passant par le centre d'inertie du corps pendulaire 22 est choisie de façon à vérifier la relation

$$(d2)^2 - (L2)(d2)/(b-1)^2 + I_0/m = 0$$

afin d'accorder les corps pendulaires 22 sur la pulsation propre (b-1)$\Omega$. Dans la relation ci-dessus, $I_0$ désigne le moment d'inertie du corps 22 relativement à l'axe B2, et m désigne sa masse.

Dans l'agencement représenté sur la figure 4, le bras 10c du support se termine en forme de chape. Une broche 40 est fixée entre les deux ailes de cette chape suivant l'axe A2. Le corps pendulaire 22 est monté sur cette broche 40 par l'intermédiaire de roulements à billes 42 lui permettant de pivoter autour de l'axe A2. Sur son côté opposé à la broche 40, le corps pendulaire 22 comporte des trous taraudés 44 permettant de visser des masselottes de réglage 46. Ajouter des masselottes 46 conduit à augmenter le rapport $I_0$/m et donc à diminuer la pulsation d'accord. Si, inversement, on souhaite augmenter la pulsation d'accord, on peut prévoir de fixer des masselottes en forme de disques de petit diamètre en une position centrée sur l'axe B2.

Pour que le dispositif puisse également atténuer des vibrations parallèlement à l'axe O de rotation du rotor, générées par le battement des pales, on peut prévoir que les bras 10a, 10b, 10c du support 10 comportent, entre l'axe O et les axes de mouvement pendulaire A1, A2, une portion amincie suivant la dimension parallèle à l'axe O. Une telle portion amincie 50 est représentée sur la figure 3, uniquement pour le bras 10c. Cette portion amincie 50 est dimensionnée pour avoir une flexibilité permettant aux corps 20, 22 d'atténuer par battement des modes de vibration du rotor parallèlement à l'axe O. Dans le cas d'un rotor à trois pales, on pourra notamment dimensionner la portion amincie 50 pour atténuer des modes de battement de pulsation 6$\Omega$.

La figure 9 montre un dispositif d'atténuation en pied de pale. Ce dispositif est essentiellement symétrique par rapport à l'axe d'envergure C de la pale 60. Mais, à des fins de comparaison, on a représenté un dispositif selon l'invention sur la partie inférieure de la figure 9, et un élément conventionnel d'atténuation en pied de pale sur la partie supérieure de la figure 9. Le dispositif comprend un support tubulaire 62 fixé à la pale 60 ou incorporé à celle-ci. L'alésage du support tubulaire 62 définit l'axe de mouvement pendulaire A3 qui est perpendiculaire à la fois à l'axe C d'envergure de la pale et à l'axe O de rotation du rotor. Une broche 64 est montée pivotante autour de l'axe A3 dans le support 62, par l'intermédiaire de roulements à billes 66. A chaque extrémité de la broche 64, est fixé un bras 68 s'étendant transversalement à l'axe A3. A son extrémité opposée à la broche 64, le bras 68 comporte un doigt cylindrique 70 s'étendant suivant un axe B3 parallèle à l'axe A3 et situé à une distance d3 de ce dernier. Le corps pendulaire 80 est monté pivotant sur le doigt 70 par l'intermédiaire de roulements à billes 82, de façon que son centre d'inertie soit positionné sur l'axe de rotation B3. Partant d'une conception classique d'un élément pendulaire d'atténuation en pied de pale, dans laquelle le corps pendulaire 80' de masse m3' a un mouvement pendulaire simple d'excentricité d3' autour de l'axe A3 (voir partie supérieure de la figure 9), avec une efficacité massique E < 1 (par exemple E=0,85), on peut ainsi réduire la masse pendulaire d'un facteur E en augmentant l'excentricité d3 d'un facteur 1/E. On obtient alors le même fonctionnement (même accord en pulsation, même absorption des vibrations et mêmes amplitudes angulaires), mais avec un gain de masse très appréciable.

**Revendications**

1.  Dispositif d'atténuation de vibrations pour rotor d'hélicoptère, comprenant au moins un corps pendulaire (20;80) monté sur le rotor de façon à pouvoir osciller autour d'un axe de mouvement pendulaire (A1;A3) espacé du centre d'inertie du corps pendulaire, caractérisé en ce que le corps pendulaire est monté pivotant autour d'un axe de rotation propre (B1;B3) parallèle à l'axe de mouvement pendulaire et situé sensiblement plus près du centre d'inertie du corps pendulaire que de l'axe de mouvement pendulaire.

2.  Dispositif selon la revendication 1, caractérisé en ce que l'axe de rotation (B1;B3) du corps pendulaire passe par son centre d'inertie.

3. Dispositif selon la revendication 1 ou 2, caractérisé en ce qu'il comprend des moyens (325) de réglage de la distance (d1) entre l'axe de mouvement pendulaire (A1) et l'axe (B1) de rotation du corps pendulaire (20).

4. Dispositif selon la revendication 3, caractérisé en ce que les moyens de réglage de distance (325) comprennent un élément d'espacement (326) s'étendant transversalement auxdits axes et deux broches respectivement fixées à l'élément d'espacement suivant l'axe de mouvement pendulaire (A1) et l'axe de rotation (B1), plusieurs orifices (327) étant ménagés dans l'élément d'espacement pour permettre d'installer les broches en sélectionnant la distance les séparant.

5. Dispositif selon l'une quelconque des revendications 1 à 4, caractérisé en ce que le corps pendulaire (20) est monté sur un vilebrequin (425) ayant une première broche (428) s'étendant suivant l'axe (B1) de rotation du corps pendulaire et recevant celui-ci de façon pivotante, une seconde broche (424) s'étendant suivant l'axe (A1) de mouvement pendulaire et un élément d'espacement (426) auquel sont fixées les première et deuxième broches, l'élément d'espacement comportant des moyens pour recevoir des masselottes de réglage (429).

6. Dispositif selon l'une quelconque des revendications 1 à 5, pour l'atténuation de vibrations dans un plan perpendiculaire à l'axe (O) de rotation du rotor, l'axe de mouvement pendulaire étant sensiblement parallèle à l'axe de rotation du rotor, caractérisé en ce qu'il comporte au moins un bras (10a,10b,10c) lié en rotation au moyeu du rotor, ce bras supportant un premier corps pendulaire (20) mobile autour d'un premier axe de mouvement pendulaire (A1) espacé du centre d'inertie du premier corps pendulaire et sensiblement parallèle à l'axe de rotation du rotor (O), le premier corps pendulaire étant monté pivotant autour d'un axe de rotation propre (B1) parallèle au premier axe de mouvement pendulaire et situé sensiblement plus près du centre d'inertie du premier corps pendulaire que du premier axe de mouvement pendulaire, et le bras supportant en outre un second corps pendulaire (22) mobile autour d'un second axe de mouvement pendulaire (A2) espacé du centre d'inertie du second corps pendulaire et sensiblement parallèle à l'axe de rotation du rotor.

7. Dispositif selon la revendication 6, caractérisé en ce que le second corps pendulaire (22) est monté de façon que son seul degré de liberté soit son oscillation autour du second axe de mouvement pendulaire (A2).

8. Dispositif selon la revendication 7, caractérisé en ce que pour atténuer des vibrations à une pulsation $\omega$ égale à un nombre prédéterminé de fois la vitesse angulaire $\Omega$ du rotor au moyen du second corps pendulaire, le second corps pendulaire (22) est agencé de façon à vérifier approximativement la relation

$$I_0/m \ = \ L^2/[4\,(\omega/\Omega)^4]$$

où m désigne la masse du second corps pendulaire ;
$I_0$ désigne son inertie autour de l'axe (B2) parallèle au second axe de mouvement pendulaire et passant par son centre d'inertie, et L désigne la distance entre l'axe de rotation du rotor (O) et le second axe de mouvement pendulaire (A2).

9. Dispositif selon la revendication 7 ou 8, caractérisé en ce que, le rotor comportant b pales, le premier corps pendulaire (20) est réglé pour atténuer des vibrations de pulsation (b+1)$\Omega$ et le second corps pendulaire (22) est réglé pour atténuer des vibrations de pulsation (b-1)$\Omega$, $\Omega$ désignant la vitesse angulaire du rotor.

10. Dispositif selon l'une quelconque des revendications 1 à 9, pour atténuer à la fois des vibrations dans un plan perpendiculaire à l'axe (O) de rotation du rotor et des vibrations parallèlement à l'axe de rotation du rotor, l'axe de mouvement pendulaire étant sensiblement parallèle à l'axe de rotation du rotor, caractérisé en ce que chaque corps pendulaire (20,22) est monté sur un bras (10a,10b,10c) lié en rotation au moyeu du rotor, ce bras comportant, entre l'axe de rotation du rotor (O) et l'axe de mouvement pendulaire (A1,A2), une portion (50) ayant une flexibilité adaptée pour atténuer des modes de vibration du rotor parallèlement à son axe de rotation.

11. Dispositif selon l'une quelconque des revendications 1 à 5, pour atténuer des vibrations au niveau du pied de chaque pale du rotor, comprenant, pour chaque pale (60), un corps pendulaire (80) oscillant autour d'un axe de mouvement pendulaire respectif (A3) perpendiculaire à l'axe de rotation du rotor et à l'envergure de la pale.

**Claims**

1. Vibration damping apparatus for helicopter rotor, comprising at least one pendulous member (20,80) swingably mounted on the rotor about an axis of pendular motion (A1,A3) spaced from the center of inertia of the pendulous member, characterized in that the pendulous member is pivotally mounted about an axis of rotation (B1,B3) parallel to the axis of pendular motion and situated substantially closer to the center of inertia of the pendulous member than to the axis of pendular motion.

2. Apparatus according to claim 1, characterized in that the axis of rotation (B1,B3) of the pendulous member passes through its center of inertia.

3. Apparatus according to claim 1 or claim 2, characterized in that it comprises means (325) for adjusting the distance (d1) between the axis of pendular motion (A1) and the axis of rotation (B1) of the pendulous member (20).

4. Apparatus according to claim 3, characterized in that the distance adjusting means (325) comprise a spacer member (326) extending transversally to said axes and two pins respectively attached to the spacer member along the axis of pendular motion (A1) and the axis of rotation (B1), a plurality of apertures (327) being arranged in the spacer member to permit the installation of the pins by selecting the distance between them.

5. Apparatus according to any one of claims 1 to 4, characterized in that the pendulous member (20) is mounted on a crankshaft (425) having a first pin (428) extending along the axis of rotation (B1) of the pendulous member and pivotally receiving said pendulous member, a second pin (424) extending along the axis (A1) of pendular motion and a spacer member (426) whereto the first and second pins are attached, the spacer element comprising means for receiving adjusting weights (429).

6. Apparatus according to any of claims 1 to 5, for damping vibrations in a plane perpendicular to the rotor axis of rotation (O), wherein the axis of pendular motion is substantially parallel to the rotor axis of rotation, characterized in that it comprises at least one arm (10a,10b,10c) rotating together with the rotor hub, said arm supporting a first pendulous member (20) movable about a first axis of pendular motion (A1) spaced from the center of inertia of the first pendulous member and substantially parallel to the rotor axis of rotation (O), the first pendulous member being pivotally mounted about an axis of rotation (B1) parallel to the first axis of pendular motion and situated substantially closer to the center of inertia of the first pendulous member than to the first axis of pendular motion, and the arm further supporting a second pendulous member (22) movable about a second axis of pendular motion (A2) spaced from the center of inertia of the second pendulous member and substantially parallel to the rotor axis of rotation.

7. Apparatus according to claim 6, characterized in that the second pendulous member (22) is mounted so that its only degree of freedom is its swing about the second axis of pendular motion (A2).

8. Apparatus according to claim 7, characterized in that to damp vibrations at a natural frequency $\omega$ equal to a predetermined number of times the angular velocity $\Omega$ of the rotor by means of the second pendulous member, the second pendulous member (22) is arranged so as to approximately satisfy the equation:

$$I_0/m \;=\; L^2/[4\,(\omega/\Omega)^4]$$

where m denotes the mass of the second pendulous member, $I_0$ denotes its inertia about the axis (B2) parallel to the second axis of pendular motion and passing through its center of inertia, and L denotes the distance between the rotor axis of rotation (O) and the second axis of pendular motion (A2).

9. Apparatus according to claim 7 or 8, characterized in that, the rotor comprising b blades, the first pendulous member (20) is tuned to damp vibrations of angular frequency (b + 1) $\Omega$ and the second pendulous member is tuned to damp vibrations of angular frequency (b - 1) $\Omega$, where $\Omega$ denotes the angular velocity of the rotor.

10. Apparatus according to any of claims 1 to 9, for damping vibrations in a plane perpendicular to the rotor axis of rotation (O) as well as vibrations parallel to the rotor axis of rotation, the axis of pendular motion being substantially parallel to the rotor axis of rotation, characterized in that each pendulous member (20,22) is mounted on an arm (10a,10b,10c) rotating together with a hub of the rotor, said arm comprising, between the rotor axis of rotation (O) and the axis of pendular motion (A1,A2), a portion (50) having a flexibility adapted to damp vibrations of the rotor parallel to its axis of rotation.

**11.** Apparatus according to any one of Claims 1 to 5, for damping vibrations at the root of each rotor blade, comprising, for each blade (60), a pendulous member (80) swinging about a respective axis of pendular motion (A3) perpendicular to the rotor axis of rotation and to the span of the blade.

**Patentansprüche**

**1.** Vibrationsdämpfungsvorrichtung für einen Hubschrauberrotor, die wenigstens einen Pendelkörper (20; 80) enthält, der am Rotor in der Weise angebracht ist, daß er um eine Pendelbewegungsachse (A1; A3) schwingen kann, die vom Trägheitszentrum des Pendelkörpers mit Abstand angeordnet ist, **dadurch gekennzeichnet**, daß der Pendelkörper schwenkbar um eine eigene Rotationsachse (B1; B3) angebracht ist, die parallel zur Pendelbewegungsachse ist und wesentlich näher zum Trägheitszentrum des Pendelkörpers liegt als die Pendelbewegungsachse.

**2.** Vorrichtung nach Anspruch 1, **dadurch gekennzeichnet**, daß die Rotationsachse (B1; B3) des Pendelkörpers durch sein Trägheitszentrum verläuft.

**3.** Vorrichtung nach Anspruch 1 oder 2, **dadurch gekennzeichnet**, daß sie Mittel (325) zur Einstellung des Abstandes (d1) zwischen der Pendelbewegungsachse (A1) und der Rotationsachse (B1) des Pendelkörpers (20) enthält.

**4.** Vorrichtung nach Anspruch 3, **dadurch gekennzeichnet**, daß die Mittel (325) zur Einstellung des Abstandes ein sich quer zu den genannten Achsen erstreckendes Abstandselement (326) und zwei Stifte aufweisen, die am Abstandselement entlang der Pendelbewegungsachse (A1) bzw. der Rotationsachse (B1) befestigt sind, wobei mehrere Öffnungen (327) im Abstandselement vorgesehen sind, um die Anbringung der Stifte bei Auswählbarkeit des sie trennenden Abstandes zu ermöglichen.

**5.** Vorrichtung nach einem der Ansprüche 1 bis 4, **dadurch gekennzeichnet**, daß der Pendelkörper (20) an einer Kurbelwelle (425) angebracht ist, die einen ersten Stift (428), der sich entlang der Rotationsachse (B1) des Pendelkörpers erstreckt und diesen in schwenkbarer Weise aufnimmt, ein zweiter Stift (424), der sich entlang der Pendelbewegungsachse (A1) erstreckt, und ein Abstandselement (426) aufweist, an dem der erste und zweite Stift befestigt sind, wobei das Abstandselement Mittel zur Aufnahme von Einstellmassen (429) enthält.

**6.** Vorrichtung nach einem der Ansprüche 1 bis 5 zur Dämpfung von Vibrationen in einer senkrecht zur Rotationsachse (O) des Rotors verlaufenden Ebene, wobei die Pendelbewegungsachse im wesentlichen parallel zur Rotationsachse des Rotors ist, **dadurch gekennzeichnet**, daß sie wenigstens einen Arm (10a, 10b, 10c) enthält, der mit der Nabe des Rotors drehverbunden ist, wobei dieser Arm einen ersten Pendelkörper (20) trägt, der um eine erste Pendelbewegungsachse (A1) beweglich ist, die mit Abstand zum Trägheitszentrum des ersten Pendelkörpers und im wesentlichen parallel zur Rotationsachse (O) des Rotors angeordnet ist, wobei der erste Pendelkörper schwenkbar um eine eigene Rotationsachse (B1) angebracht ist, die parallel zur ersten Pendelbewegungsachse ist und wesentlich näher zum Trägheitszentrum des ersten Pendelkörpers als zur ersten Pendelbewegungsachse liegt, und wobei der Arm außerdem einen zweiten Pendelkörper (22) trägt, der um eine zweite Pendelbewegungsachse (A2) beweglich ist, die zum Trägheitszentrum des zweiten Pendelkörpers mit Abstand und zur Rotationsachse des Rotors im wesentlichen parallel angeordnet ist.

**7.** Vorrichtung nach Anspruch 6, **dadurch gekennzeichnet**, daß der zweite Pendelkörper (22) derart angebracht ist, daß sein einziger Freiheitsgrad seine Schwingung um die zweite Pendelbewegungsachse (A2) ist.

**8.** Vorrichtung nach Anspruch 7, **dadurch gekennzeichnet**, daß zum Dämpfen der Vibrationen mit einer Kreisfrequenz $\omega$, die gleich einer vorher festgelegten Zahl mal der Winkelgeschwindigkeit $\Omega$ des Rotors ist, mittels des zweiten Pendelkörpers der zweite Pendelkörper (22) so gestaltet ist, daß annähernd die Beziehung

$$I_0/m = L^2/[4(\omega/\Omega)^4]$$

verifiziert wird, worin m die Masse des zweiten Pendelkörpers bezeichnet, $I_0$ dessen Trägheit um die Achse (B2), die parallel zur zweiten Pendelbewegungsachse und durch dessen Trägheitszentrum verläuft, bezeichnet und L den Abstand zwischen der Rotationsachse (O) des Rotors und der zweiten Pendelbewegungsachse (A2) bezeichnet.

9. Vorrichtung nach Anspruch 7 oder 8, **dadurch gekennzeichnet**, daß bei Vorhandensein von b Blättern des Rotors der erste Pendelkörper (20) für ein Dämpfen der Vibrationen mit der Kreisfrequenz $(b+1)\Omega$ eingestellt ist und der zweite Pendelkörper (22) für ein Dämpfen der Vibrationen mit der Kreisfrequenz $(b-1)\Omega$ eingestellt ist, wobei $\Omega$ die Winkelgeschwindigkeit des Rotors bezeichnet.

10. Vorrichtung nach einem der Ansprüche 1 bis 9 zum Dämpfen zugleich der Vibrationen in einer zur Rotationsachse (O) des Rotors senkrecht verlaufenden Ebene und der Vibrationen parallel zur Rotationsachse des Rotors, wobei die Pendelbewegungsachse im wesentlichen parallel zur Rotationsachse des Rotors ist, **dadurch gekennzeichnet**, daß jeder Pendelkörper (20, 22) an einem Arm (10a, 10b, 10c) angebracht ist, der mit der Nabe des Rotors drehverbunden ist, wobei dieser Arm zwischen der Rotationsachse (O) des Rotors und der Pendelbewegungsachse (A1, A2) einen Bereich (50) aufweist, der eine Flexibilität hat, die für eine Dämpfung der Vibrationsarten des Rotors parallel zu seiner Rotationsachse ausgelegt ist.

11. Vorrichtung nach einem der Ansprüche 1 bis 5 zum Dämpfen der Vibrationen in Höhe des Fußes jedes Blattes des Rotors, der für jedes Blatt (60) einen Pendelkörper (80) aufweist, der um eine jeweilige Pendelbewegungsachse (A3) schwingt, die zur Rotationsachse des Rotors und zur Spannweite des Blattes senkrecht ist.

FIG.1.

FIG.2.

FIG.3.

FIG.4.

FIG.5.

FIG.6.

FIG.7.

FIG.8.

FIG.9.